# EUROPÄISCHE PATENTSCHRIFT

(11) **EP 3 630 515 B1**
(45) Veröffentlichungstag und Bekanntmachung des Hinweises auf die Patenterteilung: **26.02.2025**
(21) Anmeldenummer: 18726442.9
(22) Anmeldetag: 18.05.2018
(51) Int. Cl.: E05F 15/44, B60J 10/00, B60J 10/86, B60Q 1/32

(54) **SICHERHEITSPROFILLEISTE UND TÜR MIT SICHERHEITSPROFILLEISTE**
PROFILED SAFETY STRIP AND DOOR COMPRISING A PROFILED SAFETY STRIP
BAGUETTE PROFILÉE DE SÉCURITÉ ET PORTE COMPRENANT UNE BAGUETTE PROFILÉE DE SÉCURITÉ

(30) Priorität: 01.06.2017 DE 102017112133
(43) Veröffentlichungstag der Anmeldung: 08.04.2020
(73) Patentinhaber: Gummi-Welz GmbH u. Co. KG Gummi-Kunststofftechnik-Schaumstoffe, 89231 Neu-Ulm (DE)
(72) Erfinder: GREIN, Horst, 89233 Neu-Ulm (DE)
(74) Vertreter: Ter Meer Steinmeister & Partner
(86) Internationale Anmeldenummer: PCT/EP2018/063142
(87) Internationale Veröffentlichungsnummer: WO 2018/219694

(56) Entgegenhaltungen:
- WO-A1-2011/138292
- WO-A1-2011/138292
- CN-A- 102 806 832
- CN-A- 102 806 832
- DE-A1- 102012 105 593
- DE-A1- 102012 105 593
- US-A1- 2002 126 498
- US-A1- 2002 126 498
- US-A1- 2002 152 686
- US-A1- 2005 073 852
- US-A1- 2005 073 852
- MARY SHEN: "How to build LED Strip Lights into Neon Silicon Tube to instead Neon LED Flex", YOUTUBE, 9 March 2017 (2017-03-09), pages 3 pp., XP054982054, Retrieved from the Internet <URL:https://www.youtube.com/watch?v=Fcyu579XMpk> [retrieved on 20210714]

## Beschreibung

### Sicherheitsprofilleiste und Tür mit Sicherheitsprofilleiste

Die Erfindung betrifft eine Sicherheitsprofilleiste für wenigstens eine Tür von Transportmitteln. Weiter betrifft sie eine Tür mit einer Sicherheitsprofilleiste. Insbesondere betrifft die Erfindung eine Sicherheitsgummiprofilleiste, die eine vorgegebene Flexibilität oder Elastizität aufweist.

Als Transportmittel im Sinne der Erfindung sind insbesondere Nutzfahrzeuge, Fahrstühle, Flugzeuge oder Seilbahngondeln zu verstehen. Die erfindungsgemäße Sicherheitsprofilleiste wird vorzugsweise an Türen oder beweglichen Elementen von Transportmitteln eingesetzt, um Personen, die die Transportmittel benutzen, eine Bewegung oder allgemein einen Zustand der Tür bzw. des beweglichen Elements zu signalisieren.

Bisher werden in Transportmitteln Signallampen in Aluminium- oder Stahl-Türprofile integriert oder an den Seitenwänden angeordnet. Dies ist herstellungstechnisch aufwendig und beeinträchtigt gegebenenfalls die Steifigkeit der Aluminium- oder Stahl-Türprofile. Außerdem ist eine Spannungszufuhr zu den Signallampen in derartigen Türprofilen oder an den Seitenwänden des Transportmittels erforderlich.

Gummiprofilleisten haben herkömmlich die Aufgabe, eine Abdichtung zwischen einer Tür und einen Rahmen bzw. einer anderen Tür bereitzustellen. Daher sind Gummiprofilleisten an den Rändern der Aluminium- oder Stahl-Türprofile angebracht.

Aufgrund der gestiegenen Anforderungen an Transportmittel und aufgrund von erhöhten Sicherheitsvorschriften weisen Gummiprofilleisten neben ihrer Abdichtfunktion durch ihre Elastizität auch eine oder mehrere Signalgeberfunktionen auf. So sind in viele Gummiprofilleisten Kontaktelemente integriert, die einen Kontakt mit einem Gegenstand oder einem Benutzer anzeigen und ggf. eine Bewegung der Tür oder des beweglichen Elements unterbrechen oder stoppen. Darüber hinaus sind Gummiprofilleisten bekannt, die eine Lichtgitteranordnung aufweisen, mit der ein Raum um die sich bewegende Tür herum kontaktlos überwacht wird, indem ein nicht sichtbares Licht ausgesendet und/oder empfangen wird. Basierend auf Veränderungen des empfangenen Lichts kann auf einen Gegenstand oder eine Person innerhalb des Bewegungsbereichs der Tür geschlossen werden und eine entsprechende Steuerung vorgenommen werden.

Im Automobilbereich sind Türprofile oder Zierleisten bekannt, die Lichtelemente enthalten, um beispielsweise den Boden oder Einstiegsbereich zu beleuchten, um somit ein Einsteigen ins Fahrzeug im Dunkeln zu erleichtern.

WO 2011/138292 A1 betrifft eine leuchtfähige Fingerschutzvorrichtung für eine Tür eines Fahrzeugs. Die Fingerschutzvorrichtung weist eine Schutzleiste zum Anbringen an eine Türkante der Tür und ein Leuchtmittel zum Signalisieren eines Türzustands der Tür auf. Das Leuchtmittel erstreckt sich entlang der Türkante und ist mit der Schutzleiste verbunden.

US 2005/0073852 A1 betrifft eine Lichtquelle, die in eine Dichtungsstreifen- oder Klemmstreifenanordnung eingebaut ist und an einer beweglichen Platte oder an der Öffnung in einem Rahmen oder einer Platte angebracht ist, die die bewegliche Platte aufnimmt. Das Licht wird beim Öffnen oder Schließen einer beweglichen Verkleidung des Fahrzeugs oder bei einem Kontakt mit einem Hindernis angesteuert. Das Licht kann intermittierend während des Öffnens oder Schließens und kontinuierlich arbeiten.

US 2002/126498 A1 zeigt einen beleuchteten Wetterstreifen einer Fahrzeugkarosserie, der einen Greifabschnitt, einen röhrenförmigen Dichtungsabschnitt, einen in den Greifabschnitt eingebetteten Träger und eine Lichtquelle umfasst.

US 2002/152686 A1 offenbart eine beleuchtende Wetterdichtung zum Abdichten einer Grenzfläche zwischen gegenüberliegenden Oberflächen und Beleuchten der angrenzenden Umgebung. Die beleuchtende Wetterdichtung umfasst ein Lichtband, das sich entlang einer Längsabmessung der Wetterdichtung erstreckt.

Aufgabe der Erfindung ist es, eine Sicherheitsgummiprofilleiste oder eine elastische Sicherheitsprofilleiste anzugeben, die eine Signalfunktion ausübt. Die erfindungsgemäße Sicherheitsprofil- leiste muss für den Einsatz in Transportmitteln ausreichend robust ausgebildet sein und einfach und kostengünstig herstellbar sein, wobei die Signalfunktion vorzugsweise nachrüstbar bzw. austauschbar ausgestaltet ist.

Der Erfindung liegt der Gedanke zu Grunde, die Funktionalität von elastischen Profilleisten, die Gummiprofile genannt werden, zu vergrößern, um somit den Herstellern von Transportmitteln Alternativen für die Implementierung von Sicherheitsvorrichtungen anzubieten. Durch die jeder elastischen Profilleiste innewohnende Abdichtungseigenschaft wird eine Integration von weiteren Sicherheitselementen in die Profilleiste begünstigt, da insbesondere im Bereich der Transportmittel ein Einsatz in einer feuchten Umgebung mit großen Temperaturschwankungen und auch mit mechanischen Beanspruchungen erfolgt, der eine ausreichende Abdichtung insbesondere von elektrischen Elementen erfordert. Dies ist speziell für eine lange Haltbarkeit der Sicherheitsvorrichtungen notwendig.

Die Aufgabe wird durch die Merkmale der unabhängigen Ansprüche gelöst. Vorteilhafte Ausgestaltungen sind den Unteransprüchen zu entnehmen.

Die Aufgabe wird insbesondere durch eine Sicherheitsprofilleiste für eine Tür von Transportmitteln gelöst, wobei die Sicherheitsprofilleiste einen opaken elastischen Basiskörper enthält, in dem wenigstens ein Aufnahmebereich ausgebildet ist, wobei in dem wenigstens einen Aufnahmebereich eine Einsatzleiste angeordnet ist, die wenigstens eine Lichtquelle enthält und aus einem elastischen Material ausgebildet ist, welches wenigstens teilweise transparent ist.

In einer bevorzugten Ausgestaltung ist ein erster Aufnahmebereich als ein wenigstens zu einer Außenseite der Sicherheitsprofilleiste offener Hohlraum ausgebildet, wobei in den offenen Hohlraum eine aus wenigstens teilweise transparentem Material gefertigte erste Einsatzleiste eingefügt ist, die die Lichtquelle enthält. Der erste Aufnahmebereich ist als Formschlussbereich ausgebildet.

Bevorzugt ist ein zweiter Aufnahmebereich als Formschlussbereich ausgebildet, wobei am Formschlussbereich eine zweite Einsatzleiste einsetzbar oder ansetzbar ist, die einen dem Formschlussbereich entsprechenden Befestigungsabschnitt aufweist.

Es wird vorgeschlagen, dass der offene Hohlraum in einen Innenraum oder zur Außenseite des Transportmittels gerichtet ist und/oder der Formschlussbereich an einer Stirnseite des Basiskörpers ausgebildet ist, die zu einer weiteren Tür oder zu einem Anschlag gerichtet ist.

In einer beispielhaften Ausgestaltung weist der offene Hohlraum wenigstens eine Ausnehmung auf, die einen Formschluss mit wenigstens einer korrespondierenden Ausstülpung der Einsatzleiste bildet.

Bevorzugt ist an einer an die Einsatzleiste angrenzenden Fläche ein reflektierender Bereich ausgebildet, der ein von der Lichtquelle abgestrahltes Licht von dem Basiskörper hinweg oder aus diesem heraus leitet.

Die Sicherheitsprofilleiste kann eine elektrische Kontaktleiste aufweisen. Dadurch wird die Funktionalität der Sicherheitsprofilleiste erhöht.

Die Kontaktleiste kann ein Kontaktsignal ausgeben, welches zur Ansteuerung der Lichtquelle verwendet wird.

Die Kontaktleiste kann in einem Kontaktbereich der Sicherheitsprofilleiste mit einem Anschlag oder im Kontaktbereich der Sicherheitsprofilleiste mit einer anderen Tür angeordnet sein. Dadurch lässt sich einfach ein mechanischer Kontakt mit der anderen Tür bzw. einem Anschlag oder Gegenstand erkennen.

Die Kontaktleiste ist vorzugsweise in einem umschlossenen Hohlraum angeordnet, der bei elastischer Verformung eine Ausgabe des Kontaktsignals durch die Kontaktleiste bewirkt.

Bevorzugt enthält die Lichtquelle LEDs, die Licht in einer oder mehreren Farben im sichtbaren Wellenbereich ausgeben. LEDs weisen einen geringen Stromverbrauch auf und lassen sich gut integrieren. Darüber hinaus sind LEDs erhältlich, die Licht in vielen verschiedenen Farben abstrahlen können, so dass die Art und Weise der Signalisierung gut an die Einsatzbedingungen angepasst werden kann.

Vorzugsweise kann die Lichtquelle in der einen oder in beiden Einsatzleisten beim Schließen der Tür ein Licht einer ersten Farbe ausgeben und/oder beim Öffnen der Tür ein Licht einer anderen Farbe.

Die LEDs in der Einsatzleiste können je nach Richtung der Türbewegung sequentiell in wenigstens eine Richtung verlaufend eingeschaltet werden.

Die Lichtquelle kann vorzugsweise als langgestrecktes Flachband mit mehreren LEDs ausgestaltet sein.

Das langgestreckte Flachband kann mit seiner Längsausrichtung in den offenen Hohlraum eingesetzt sein und die mehreren LEDs können auf einer oder beiden Seitenflächen des Flachbandes angeordnet sein.

Bevorzugt bildet das wenigstens teilweise transparente Material der Einsatzleiste einen optischen Diffusor.

Die Sicherheitsprofilleiste kann bevorzugt einen umschlossenen Hohlraum zur Aufnahme einer Lichtgitteranordnung aufweisen. Dadurch kann die Funktionalität der Sicherheitsprofilleiste weiter erhöht werden. Hierbei kann die Anordnung der Einsatzleiste an die Anordnung des Hohlraums zur Aufnahme einer Lichtgitteranordnung in der Sicherheitsprofilleiste angepasst werden. Dadurch wird eine Beeinflussung der Funktion der Lichtgitteranordnung durch Licht von den Einsatzleisten verhindert.

Die zweite Einsatzleiste kann vorzugsweise auch eine Lichtquelle enthalten und auf einer dem offenen Hohlraum mit der ersten Einsatzleiste gegenüberliegenden Seite der Sicherheitsprofilleiste angeordnet sein. Durch diese Anordnung ist eine Signalisierung zu beiden Seiten der Sicherheitsprofilleiste möglich.

Bevorzugt wird der Formschluss mittels einer schwalbenschwanzförmigen Ausnehmung im Basiskörper und einer dazu korrespondierenden Ausstülpung an der zweiten Einsatzleiste oder einem schwalbenschwanzförmigen Ausstülpung am Basiskörper und einer entsprechenden Ausnehmung an der zweiten Einsatzleiste gebildet.

Die zweite Einsatzleiste kann weiter eine oder mehrere Luftkammern aufweisen, die in einem Kontaktbereich der zweiten Einsatzleiste ausgebildet sind. Dadurch ist eine sichere Erkennung eines Kontakts durch die Kontaktleiste gewährleistet.

Die zweite Einsatzleiste ist vorzugsweise aus dem gleichem Material wie die erste Einsatzleiste ausgebildet. Dadurch ist die Herstellung der ersten und der zweiten Einsatzleiste günstiger. Die zweite Einsatzleiste kann aber auch durch ein anderes Material hergestellt werden, welches eine höhere Steifigkeit aufweist. Dies hat den Vorteil, dass die zweite Einsatzleiste nicht so leicht abknicken kann. Bei der ersten Einsatzleiste tritt ein derartiges Abknicken nicht auf, da diese fast vollständig vom Basiskörper umgegeben wird.

Bevorzugt kann die Einsatzleiste einen in Längsrichtung der Sicherheitsprofilleiste verlaufenden Schacht aufweisen, in den die Lichtquelle einsetzbar ist, wobei dieser Schacht jeweils an seiner Stirnseite wasserdicht versiegelt ist. D.h. die Sicherheitsprofilleiste wird vorzugsweise über die gesamte Höhe der Tür angebracht. Die eine oder beide Einsatzleisten verlaufen vorzugsweise somit jeweils auch von der Unterkante der Tür bis zur Oberkante der Tür. Alternativ ist es auch möglich, die eine oder beide Einsatzleisten nur in einem bestimmten Bereich der Sicherheitsprofilleiste auszubilden. Bspw. könnte die eine oder beide Einsatzleisten nur in dem Bereich der Sicherheitsprofilleiste angebracht bzw. eingesetzt sein, die im direkten Blickfeld der Personen liegen. D.h. die Einsatzleisten könnten nur im mittleren Bereich der Sicherheitsprofilleiste angebracht bzw. eingesetzt sein und ein oberer und/oder unterer Bereich der Sicherheitsprofilleiste würde dann keine Einsatzleiste in diesen Bereichen aufweisen. Es ist auch möglich, die Einsatzleisten in diesen passiven Bereichen nicht mit Lichtquellen zu bestücken und stattdessen nur die teilweise transparente Einsatzleiste einzusetzen oder die Einsatzleiste würde in diesem Bereich aus opakem

Material hergestellt sein. Dann würde die Einsatzleiste mehrere Längsabschnitte enthalten, wobei einer der Längsabschnitte Lichtquellen enthalten würde und wenigstens ein anderer Längsabschnitt keine. Man kann somit auch von mehreren Einsatzleisten sprechen, die in den Hohlraum eingesetzt werden. Die Stirnflächen der Einsatzleiste, d.h. die Abschnitte der Einsatzleiste, die bspw. an der Unterkante und der Oberkante der Tür liegen, werden versiegelt, so dass keine Feuchtigkeit zwischen Einsatzleiste und Basiskörper eindringen kann, aber auch keine Feuchtigkeit zwischen Einsatzleiste und Lichtquelle.

In einer bevorzugten Ausgestaltung können zwischen die erste Einsatzleiste und den offenen Hohlraum Verspannelemente eingesetzt werden, um die erste Einsatzleiste im Hohlraum zu fixieren. Dies hat den Vorteil, dass die Einsatzleiste eine einfache Form ohne Ausnehmungen oder Ausstülpungen aufweist. Die Verspannelemente werden auch Keder genannt. Die Verwendung von Verspannelementen ermöglich ein späteres Herausnehmen der Einsatzleiste aus dem Basiskörper, bspw. um diese zu ersetzen.

Bevorzugt ist die erste Einsatzleiste zwischen Kontaktleiste und einem Befestigungsbereich der Sicherheitsprofilleiste an der Tür und/oder außerhalb eines flexiblen Kontaktbereichs der Sicherheitsprofilleiste angeordnet. D.h. die Einsatzleiste ist zwischen dem Befestigungsbereich und dem Bereich der Sicherheitsprofilleiste angeordnet, der beim Anschlagen an eine andere Tür oder einen Anschlag komprimiert wird. Bei einer Anordnung der Sicherheitsprofilleiste in einem Türprofil ist die Einsatzleiste zwischen Befestigungsbereich und Stirnseite der Sicherheitsprofilleiste angeordnet.

In einer vorteilhaften Ausgestaltung ist die zweite Einsatzleiste am Basiskörper formschlüssig befestigt und steht von diesem ab.

Es wird vorgeschlagen, dass die zweite Einsatzleiste eine oder mehrere Luftkammern und/oder wenigstens eine wenigstens teilweise transparente Profillippe aufweist, die einen flexiblen Kontaktbereich der Sicherheitsprofilleiste bilden. Dadurch wird ein Erkennen eines Kontakts mittels der Kontaktleiste verbessert.

Der Basiskörper kann vorzugsweise wenigstens einen Abstützkeil aufweisen, der die zweite Einsatzleiste von einer Innenseite der Sicherheitsprofilleiste abstützt, um dadurch ein Abknicken der zweiten Einsatzleiste insbesondere in einen Abstrahlbereich der Lichtgitteranordnung zu verhindern.

Die zweite Einsatzleiste kann Licht in Richtung Stirnseite der Sicherheitsprofilleiste und zu einer Außenseite der Tür abstrahlen.

Der Schacht zur Aufnahme der Lichtquelle in der zweiten Einsatzleiste kann im Wesentlichen parallel zur abstützenden Fläche des Abstützkeils verlaufen, wobei auch eine andere Ausrichtung des Schachts möglich ist, z.B. rechtwinklig zur Fensterscheibe und/oder parallel zum Schacht der ersten Einsatzleiste.

Als Material für den opaken elastischen Basiskörper eignet sich bevorzugt Gummi.

In einer bevorzugten Ausgestaltung umschließt die Einsatzleiste die wenigstens eine Lichtquelle. Dadurch wird die Lichtquelle sicher vor Beschädigung geschützt. Außerdem kann die Lichtquelle vorab in die Einsatzleiste eingebaut werden oder umspritzt werden und die Einsatzleiste mit integrierter Lichtquelle an einem anderen Ort in die Sicherheitsprofilleiste eingesetzt werden.

Die Sicherheitsprofilleiste kann einen ersten Kontaktbereich und einen zweiten Kontaktbereich aufweisen, wobei der erste Kontaktbereich aus opakem Material und der zweite Kontaktbereich aus wenigstens teilweise transparentem Material ausgebildet ist. Durch die Ausbildung des Kontaktbereichs aus teilweise transparentem Material kann eine Lichtabstrahlung auch in den Kontaktbereich erfolgen.

In einer bevorzugten Ausgestaltung kann die erste und/oder zweite Einsatzleiste auch einen opaken und einen wenigstens teilweise transparenten Anteil aufweisen. D.h. die Einsatzleiste ist aus zwei Komponenten gebildet. Dadurch lassen sich bspw. bessere Befestigungsmöglichkeiten der Einsatzleiste im Basiskörper erzielen, da der teilweise transparente Anteil nur noch auf den opaken Anteil der Einsatzleiste aufgesetzt werden muss. Die Lichtquelle ist vorzugsweise am opaken Anteil befestigt und der teilweise transparente Anteil kann in Abstrahlrichtung angeordnet oder aufgesetzt sein, um eine bestimmte Richtung der Lichtabstrahlung festzulegen.

Vorzugsweise ist die erste und/oder zweite Einsatzleiste in einem Abstrahlbereich transparent und in dem Befestigungsbereich opak ausgestaltet.

Die Aufgabe wird auch durch eine Tür mit einer erfindungsgemäßen Sicherheitsprofilleiste gelöst.

Vorzugsweise weisen die erste und zweite Einsatzleiste die gleiche Form auf. Damit werden die Herstellungskosten reduziert.

Alternativ können die erste und zweite Einsatzleiste auch verschiedene Formen oder Konturen aufweisen. Dadurch lassen sich dann verschiedene Funktionen realisieren.

Bevorzugt ist die Sicherheitsprofilleiste in einem beweglichen Türflügel und/oder einem feststehenden Türportal angeordnet ist. Der eine oder die mehreren Türflügel können translatorische und/oder rotatorische Bewegungen ausführen.

Dabei ist es bevorzugt, dass die zweite Einsatzleiste hinter einem Glas der Tür am Basiskörper befestigt ist und sich entlang einer Innenseite des Glases erstreckt und im Kontaktbereich der Sicherheitsprofilleiste vom Glas hervorsteht.
Fig. 1a zeigt eine Tür eines Transportmittels mit der erfindungsgemäßen Sicherheitsprofilleiste,
Fig. 1b zeigt eine Tür eines Transportmittels mit einer Sicherheitsprofilleiste im Türportal,
Fig. 1c zeigt eine Tür eines Transportmittels und eine erfindungsgemäße Sicherheitsprofilleiste an der Tür und am Türportal, vorzugsweise mit einer oberen und unteren Einsatzleiste in der Sicherheitsprofilleiste am Türportal;
Fig. 2 zeigt eine Doppeltür eines Transportmittels jeweils mit der erfindungsgemäßen Sicherheitsprofilleiste,
Fig. 3a zeigt einen Querschnitt der erfindungsgemäßen Sicherheitsprofilleiste gemäß einer ersten Ausgestaltung,
Fig. 3b zeigt einen Querschnitt der erfindungsgemäßen Sicherheitsprofilleiste gemäß der ersten Ausgestaltung ohne Einsatzleiste,
Fig. 4 zeigt einen Querschnitt von erfindungsgemäßen Sicherheitsprofilleisten, die in eine Doppeltür gemäß Fig. 2 integriert sind,
Fig. 5a zeigt eine perspektivische Ansicht einer geöffneten Tür mit Sicherheitsprofilleisten gemäß

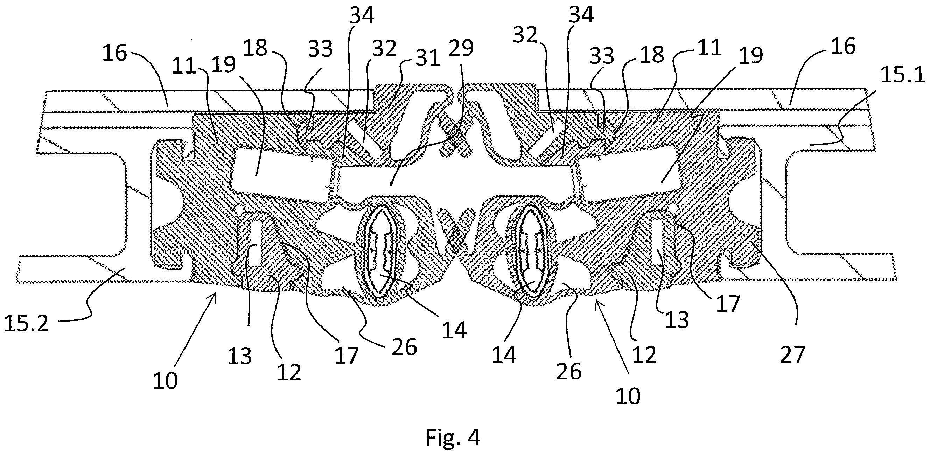

Fig. 4 von einer ersten Seite,

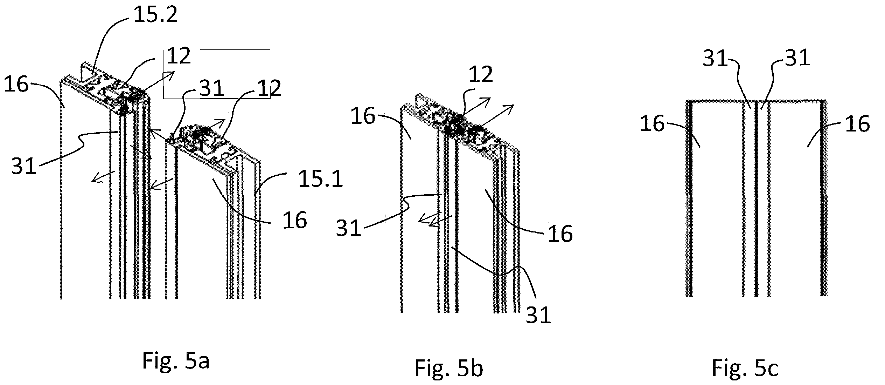

Fig. 5b zeigt eine perspektivische Ansicht der geschlossenen Tür mit Sicherheitsprofilleisten gemäß Fig. 4 von der ersten Seite,
Fig. 5c zeigt einen Ausschnitt auf eine geschlossene Doppeltür mit Sicherheitsprofilleisten von der ersten Seite,

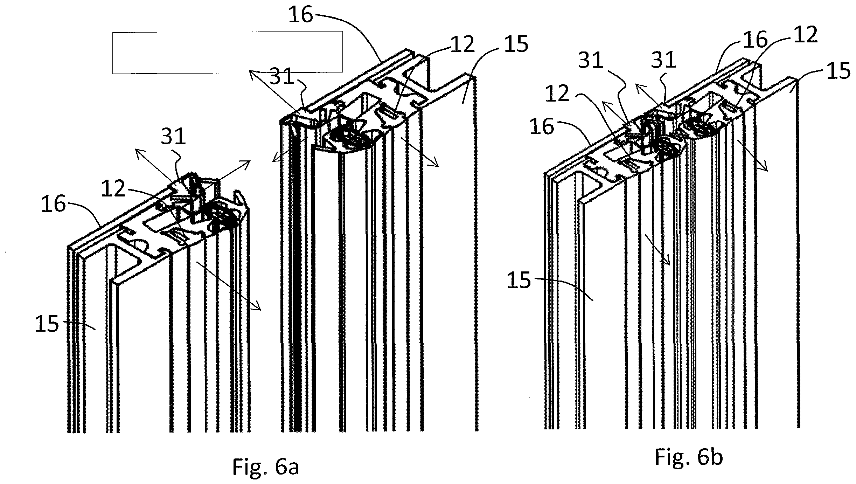

Fig. 6a zeigt eine perspektivische Ansicht einer geöffneten Tür mit Sicherheitsprofilleisten gemäß Fig. 4 von einer zweiten Seite,
Fig. 6b zeigt eine perspektivische Ansicht der geschlossenen Tür gemäß Fig. 6a,

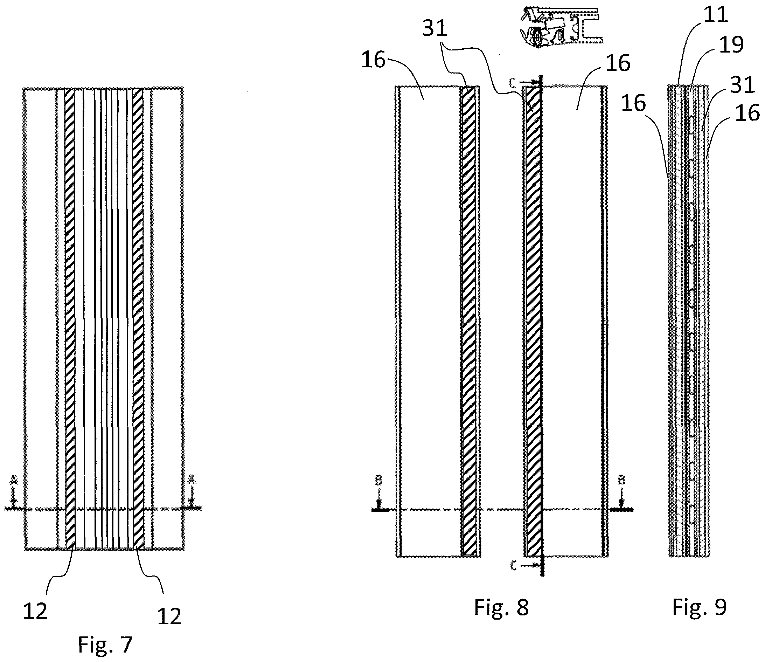

Fig. 7 zeigt eine Ansicht auf eine geschlossene Tür mit Sicherheitsprofilleisten gemäß Fig. 4 von der zweiten Seite,
Fig. 8 zeigt eine Ansicht auf eine geöffnete Tür mit Sicherheitsprofilleisten gemäß Fig. 4 von der ersten Seite,
Fig. 9 zeigt eine Schnittansicht entlang C-C gemäß Figur 8,

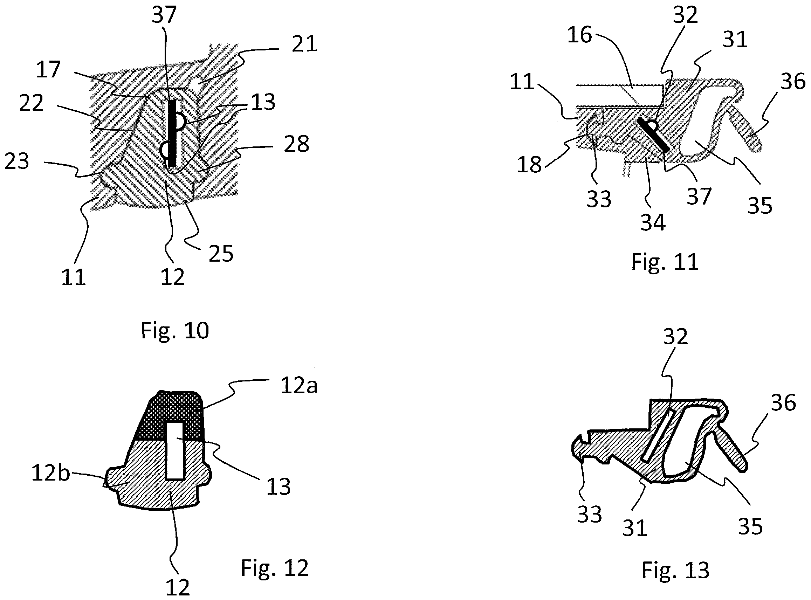

Fig. 10 zeigt einen vergrößerten Ausschnitt der ersten Einsatzleiste mit Lichtquelle der erfindungsgemäßen Sicherheitsprofilleiste,
Fig. 11 zeigt einen vergrößerten Ausschnitt der zweiten Einsatzleiste mit Lichtquelle der erfindungsgemäßen Sicherheitsprofilleiste,
Fig. 12 zeigt einen vergrößerten Ausschnitt der ersten Einsatzleiste mit Lichtquelle gemäß einer weiteren Ausgestaltung,
Fig. 13 zeigt einen vergrößerten Ausschnitt der zweiten Einsatzleiste mit Lichtquelle gemäß einer weiteren Ausgestaltung,

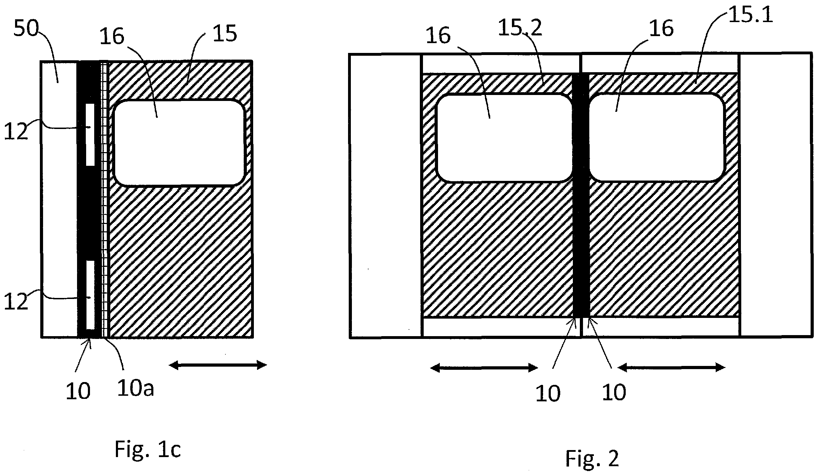

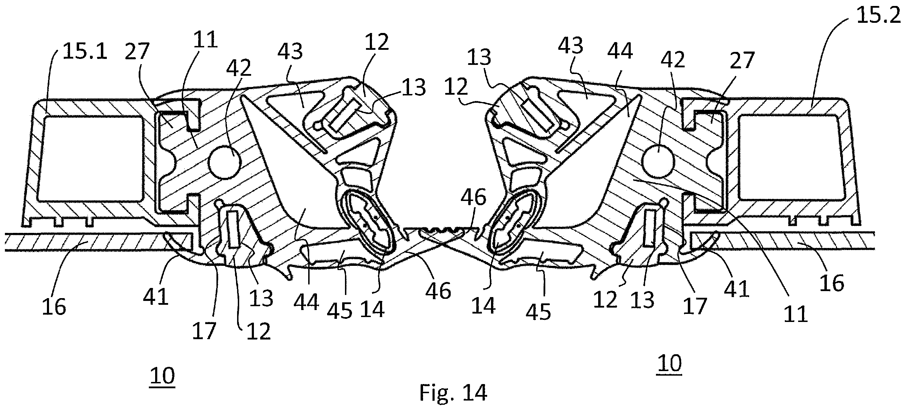

Fig. 14 zeigt einen Querschnitt von erfindungsgemäßen Sicherheitsprofilleisten gemäß einem anderen Ausführungsbeispiel, die in eine Doppeltür gemäß Fig. 2 integriert sind.

Im Folgenden wird die Erfindung mit Blick auf die einzelnen Figuren näher beschrieben.

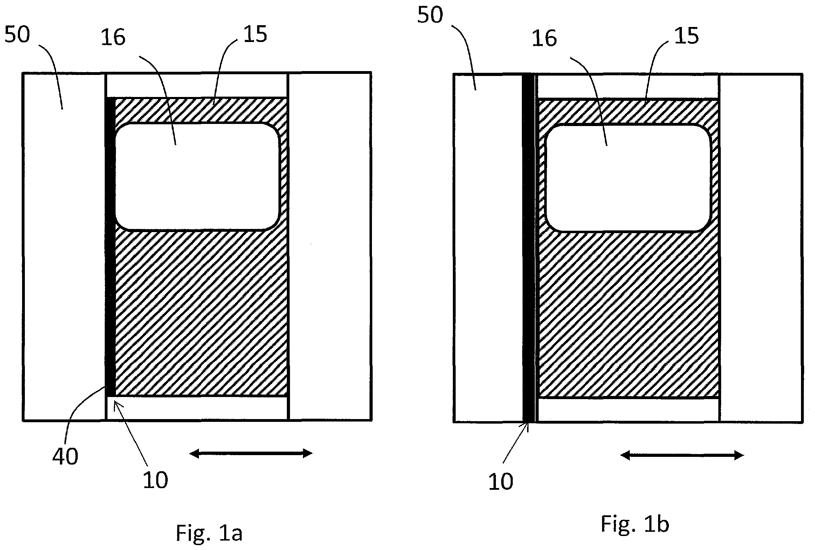

Fig. 1a zeigt schematisch eine Tür 15 eines Transportmittels, beispielsweise eines Zuges, wobei diese Tür 15 einflüglig ausgestaltet ist und als Schiebetür funktioniert, die gegen einen Anschlag 40 eines Zuges läuft, wobei die Tür an ihrer Stirnseite eine erfindungsgemäße Sicherheitsprofilleiste 10 aufweist, die beim Anschlagen der Tür 15 am Alu/Stahlprofil leicht komprimiert wird. Die Tür 15 weist vorzugsweise eine Glas- oder eine Fensterscheibe 16 auf.

Fig. 1b zeigt schematisch eine Tür 15 eines Transportmittels, die als einflüglige Tür ausgestaltet ist, wobei die erfindungsgemäße Sicherheitsprofilleiste 10 im Türportal 50 angeordnet ist. D.h. bei dieser alternativen Anordnung wird die Sicherheitsprofilleiste mit einem Profilfuß im Türportal befestigt und die sich bewegende Tür läuft bei einer Schließbewegung gegen die Sicherheitsprofilleiste 10.

Dies hat den Vorteil, dass bei der erfindungsgemäßen Sicherheitsprofilleiste und deren Montage im Türportal die Durchführungen der Leitungen für die Stromversorgung der Lichtquelle 13 innerhalb der Einsatzleiste 12 nicht in bewegliche Teile der Tür integriert werden müssen und somit eine einfachere Fertigung und Montage als auch eine zuverlässigere Betriebsweise der erfindungsgemäßen Sicherheitsprofilleiste 10 ermöglicht werden kann.

Fig. 1c zeigt eine ähnliche Anordnung wie in Fig. 1b. Hier ist auch eine Sicherheitsprofilleiste 10 am Türportal 50 befestigt. Die Sicherheitsprofilleiste 10 wird somit nicht bewegt. In Fig. 1c ist jeweils eine obere und/oder untere Einsatzleiste 12 mit Lichtquelle 13 vorgesehen, die nur im Kopfbereich und/oder im Fußbereich angeordnet sind. Die bewegliche Tür 15 gemäß Fig. 1c kann ebenso eine erfindungsgemäße Sicherheitsprofilleiste 10a aufweisen, die in einer besonderen Ausgestaltung auch eine Einsatzleiste 12 mit Lichtquelle 13 aufweisen kann. Jedoch ist es auch in einer derartigen Konstellation möglich, die Sicherheitsprofilleiste 10a an der Tür 15 ohne Einsatzleiste mit Leuchtmitteln auszugestalten und diese aus einem reinen Profilgummi herzustellen, der dann beim Schließen der Tür 15 an der Sicherheitsprofilleiste 10 zum Anliegen kommt, die am Türportal 50 befestigt ist.

In Fig. 2 ist eine zweiflüglige Tür dargestellt, die ebenso beispielsweise in einem Zug eingebaut ist. Die beiden Türelemente 15.1 und 15.2 sind als Schiebetüren ausgebildet und laufen mit ihren Stirnseiten gegeneinander, so dass die erfindungsgemäßen Sicherheitsprofilleisten 10 aneinander anliegen.

Es ist in den Figuren nicht dargestellt, jedoch ebenso möglich, dass die erfindungsgemäße Sicherheitsprofilleiste 10 an einer Drehschwenktür, einer Drehtür, einer Falttür, einer Schwenkschiebetür, einer Innenschwenktür oder einer Außenschwingtür etc. angeordnet ist, die entweder gegen einen feststehenden Türanschlag bzw. gegen einen anderen Flügel einer entsprechenden Tür läuft.

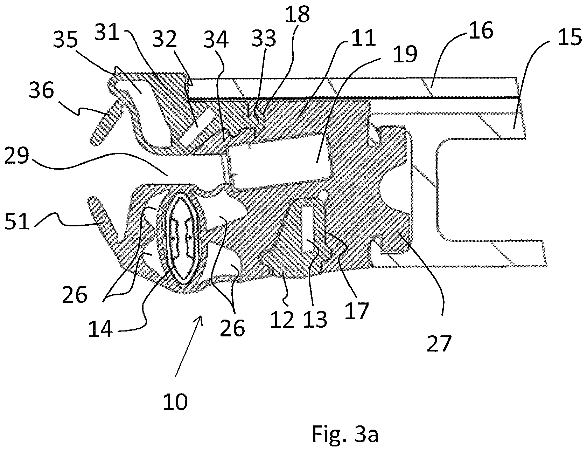

In Fig. 3a ist eine Schnittdarstellung der erfindungsgemäßen Sicherheitsprofilleiste 10 nach dem ersten Ausführungsbeispiel dargestellt. Die Sicherheitsprofilleiste 10 umfasst einen Basiskörper 11, der an der Tür 15, die hier nur als Alu/Stahl-Türprofil dargestellt ist, befestigt ist.

Der Basiskörper 11 ist vorzugsweise aus einem opaken oder lichtundurchlässigen Material hergestellt, vorzugsweise Gummi. Der Basiskörper 11 weist einen ersten Kontaktbereich auf, der unten links in der Fig. 3a dargestellt ist und aus mehreren dünnen Stegen und durch diese gebildete Luftkammern 26 gebildet wird. In diesem Kontaktbereich ist ein Hohlraum angeordnet, in dem eine Kontaktleiste 14 angeordnet ist. Weiter ist in diesem Kontaktbereich eine Profillippe 51 angeordnet, die bei einer Bewegung der Tür an den Anschlag 40 bzw. an die gegenüberliegende Tür bzw. deren Sicherheitsprofilleiste anschlägt.

Darüber hinaus weist der Basiskörper 11 einen Aufnahmebereich auf, der als offener Hohlraum 17 ausgestaltet ist und in Fig. 3a nach unten gerichtet ist. Dieser Aufnahmebereich bzw. offene Hohlraum 17 dient zur Aufnahme der ersten Einsatzleiste 12. Der offene Hohlraum 17 ragt vorzugsweise tiefer in den Basiskörper 11 hinein als seine Öffnung breit ist. Darüber hinaus weist der Basiskörper 11 einen weiteren Hohlraum auf, in den eine nicht detailliert dargestellte Lichtgitteranordnung 19 eingesetzt ist, die ein nichtsichtbares Licht in einen Abstrahlbereich 29 abstrahlt bzw. Licht über diesen oder durch diesen Abstrahlbereich 29 empfängt. Sowohl die Kontaktleiste 14 als auch die Lichtgitteranordnung 19 sind optional. D.h. im einfachsten Fall weist die Sicherheitsprofilleiste 10 keine Kontaktleiste 14 und auch keine Lichtgitteranordnung 19 auf oder nur eines davon.

Der Basiskörper 11 enthält einen weiteren Aufnahmebereich 18, der hier als schwalbenschwanzförmige Nut ausgebildet ist, in die eine schwalbenschwanzförmige Ausstülpung 33 der zweiten Einsatzleiste 31 eingesetzt wird. Der weitere Aufnahmebereich 18 ist auf der gegenüberliegenden Außenseite der Sicherheitsprofilleiste angeordnet, so dass die beiden Aufnahmebereiche 17 und 18 jeweils auf einer Seite der Sicherheitsprofilleiste 10 angeordnet sind, die jeweils im eingebauten Zustand der Sicherheitsprofilleiste 10 zu einer Innenseite und zu einer Außenseite der Tür zeigen. Der weitere Aufnahmebereich 18 ist in Fig. 3a im oberen Bereich dargestellt.

Üblicherweise ist die erste Einsatzleiste 12 zur Innenseite des Fahrzeuges gerichtet und die zweite Einsatzleiste 31, die teilweise von der Fensterscheibe 16 begrenzt ist, ist zur Außenseite gerichtet.

Der Basiskörper 11 weist angrenzend zum Hohlraum für die Lichtgitteranordnung 19 einen Abstützkeil 34 auf, der einerseits den Abstrahlbereich 29 für die Lichtgitteranordnung 19 begrenzt und andererseits die zweite Einsatzleiste 31 abstützt, um ein Abknicken der zweiten Einsatzleiste 31 in Richtung Abstrahlbereich 29 zu verhindern.

Die Sicherheitsprofilleiste 10 gemäß Fig. 3a ist an einer Außenseite durch eine Fensterscheibe 16 begrenzt, d.h. eine Seite des Basiskörpers 11 liegt an der Innenseite der Fensterscheibe 16 an. Vorzugsweise ist die Fensterscheibe 16 in diesem Bereich geschwärzt, so dass der Bereich der Sicherheitsprofilleiste 10 hinter der Fensterscheibe 16 für den Betrachter nicht sichtbar ist.

Weiter weist der Basiskörper 11 einen Befestigungsabschnitt 27 auf, der in ein Alu- oder Stahlprofil der Tür 15 eingesetzt ist.

Gegenüberliegend zum ersten Kontaktbereich der Sicherheitsprofilleiste 10 ist ein zweiter Kontaktbereich ausgebildet, der durch die zweite Einsatzleiste 31 gebildet wird. Die zweite Einsatzleiste 31 ist vorzugsweise aus transparentem elastischen Material, vorzugsweise Silikon, hergestellt.

Um den zweiten Kontaktbereich zu bilden, weist die zweite Einsatzleiste 31 eine komprimierbare Luftkammer 35 und eine von dieser abstehende Profillippe 36 auf. Bei einer Kompression dieses Kontaktbereichs durch ein Anschlagen der Sicherheitsprofilleiste an einer anderen Tür bzw. einem Anschlagprofil oder bei Berührung eines Hindernisses wird die Profillippe 36 an die Luftkammer 35 gedrückt und die Luftkammer 35 zusammengedrückt, so dass ein Auslösen der Kontaktleiste 14 im ersten oder unteren Kontaktbereich möglich wird. Dieses Auslösen der Kontaktleiste 14 wird vorzugsweise dazu verwendet, ein Schließen der Tür zu stoppen, da ein unvorhergesehener Kontakt, beispielsweise durch eine eingeklemmte Person oder einen eingeklemmten Gegenstand, angezeigt wird.

Die Kontaktleiste 14 gibt bei einem Kontakt vorzugsweise mit einem Gegenstand oder Hindernis ein Kontaktsignal aus. Dieses Kontaktsignal kann zur Ansteuerung der Lichtquelle verwendet werden. Ein nicht dargestellter Controller empfängt das Kontaktsignal und gibt dann ein Einschaltsignal an die Lichtquellen in den Einsatzleisten aus. Je nach Zustand oder Status des Transportmittels kann der Controller die Lichtausgabe der Einsatzleisten steuern. Bei planmäßigem Schließen oder Öffnen der Türen kann der Controller die Einsatzleisten anweisen, ein rotes bzw. grünes Licht auszugeben. Die Ausgabe des Lichts beim planmäßigen Öffnen oder Schließen kann vorzugsweise kontinuierlich erfolgen. Empfängt der Controller jedoch ein Signal der Kontaktleiste 14 und/oder der Lichtgitteranordnung 19 während des Schließvorgangs, die auf Berührung mit einer Person oder einem Hindernis schließen lassen, kann der Controller die Einsatzleisten anweisen, ein rotes bzw. grünes Licht auszugeben, welches gepulst ist oder periodisch aufleuchtet. Bei Eindringen einer Person in den Schließ- oder Bewegungsraum der Tür ohne Kontakt, welches durch die Lichtgitteranordnung erfasst wird, kann bspw. ein gelbes Licht ausgegeben werden, um auf die Gefahr hinzuweisen. In anderen Notsituationen, z.B. Notbremsung oder Feuer, kann ebenso ein blinkendes Licht ausgegeben werden, wobei hier auch eine Führung der Passagiere durch das Licht der mehrere Einsatzleisten erfolgen kann, in dem diese von einer zentralen Steuerung nacheinander eingeschaltet werden, um somit eine Richtung zur Evakuierung zu signalisieren.

Die Kontaktleiste 14 kann in einem Kontaktbereich der Sicherheitsprofilleiste 10 mit einem Anschlag oder im Kontaktbereich der Sicherheitsprofilleiste 10 mit einer anderen Tür angeordnet sein. Dadurch lässt sich einfach ein mechanischer Kontakt mit der anderen Tür bzw. einem Anschlag oder Gegenstand erkennen.

Die Kontaktleiste 14 ist vorzugsweise in einem umschlossenen Hohlraum angeordnet, der bei elastischer Verformung eine Ausgabe des Kontaktsignals durch die Kontaktleiste 14 bewirkt. Die erste und zweite Einsatzleiste 12 und 31 sind vorzugsweise aus dem gleichen Material hergestellt.

Erfindungsgemäß ist vorgesehen, dass die Sicherheitsprofilleiste 10 wenigstens eine Einsatzleiste enthält und die wenigstens eine Einsatzleiste wenigstens ein Lichtelement enthält. Vorzugsweise ist dieses Lichtelement von der Einsatzleiste umschlossen bzw. versiegelt. Dadurch, dass die Einsatzleiste einerseits elastisch und andererseits teilweise transparent ist, kann die Einsatzleiste als Signalgeber, d.h. als Lichtausgabe, fungieren. Außerdem wird eine sichere Versiegelung des Lichtelements ermöglicht.

Das für die wenigstens eine Einsatzleiste 12, 31 verwendete Material ist wenigstens teilweise transparent ausgestaltet, so dass das abgestrahlte Licht von einem in der Einsatzleiste 12, 31 enthaltenen Lichtelement 13, 32 von der Einsatzleiste abgestrahlt werden kann.

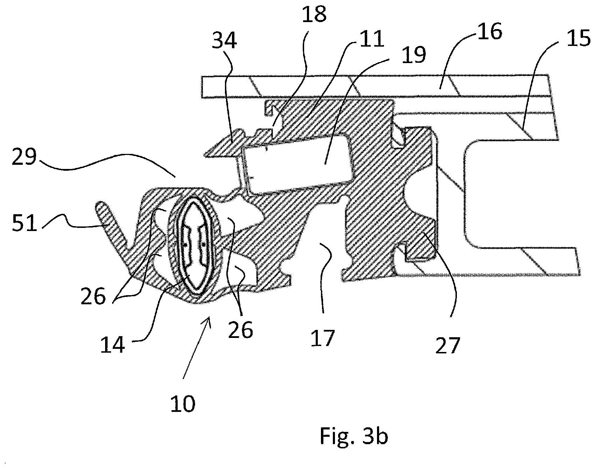

Bei der ersten Einsatzleiste 12, die an einer ersten Seite des Basiskörpers 11 (im unteren Bereich in Fig. 3) angeordnet ist, ist ein Lichtaustritt nur zur ersten Seite der Sicherheitsprofilleiste 10 vorgesehen bzw. möglich, an der die Öffnung des offenen Hohlraums 17 angeordnet ist.

Das heißt, das von der Einsatzleiste 12 abgegebene Licht wird im eingebauten Zustand der Sicherheitsprofilleiste 10 nur frontal zu einer Seite abgestrahlt und je nach Implementierung der Sicherheitsprofilleiste zur Innenseite bzw. zur Außenseite der Tür abgestrahlt, so dass eine in dem Transportmittel befindliche Person oder eine in das Transportmittel einsteigende Person ein von dieser Einsatzleiste abgestrahltes Licht erkennen kann.

Die zweite Einsatzleiste 31, die teilweise hinter der Fensterscheibe 16 angeordnet ist, ist kaum vom undurchsichtigen Material des Basiskörpers 11 umgeben und kann somit Licht zu wenigstens drei Seiten der zweiten Einsatzleiste 31 abstrahlen. Somit ist ein Abstrahlen von Licht im Wesentlichen in Richtung Stirnseite, d.h. in Richtung der Bewegung der Tür, möglich. Darüber hinaus wird das Licht durch das transparente Material der zweiten Einsatzleiste 31 auch zur zweiten Seite der Tür (meist Außenseite) abgestrahlt, an der die Fensterscheibe 16 befindlich ist.

Die Lichtquelle 13 in der ersten und/oder zweiten Einsatzleiste 12, 31 ist vorzugsweise als LED ausgebildet, die beispielsweise auf einem langgestreckten flachen Körper aufgebracht sind.

Das heißt, die Lichtabstrahlung der Lichtquelle 13 innerhalb der ersten Einsatzleiste 12 erfolgt zu den Seitenflächen des offenen Hohlraums 17 und nicht direkt zur offenen Seite des Hohlraums 17 bzw. nicht direkt zur Abstrahlfläche der ersten Einsatzleiste 12. Dies hat den Vorteil, dass der offene Hohlraum 17, der zur Aufnahme der ersten Einsatzleiste 12 dient, schmal ausgebildet werden kann und das langgestreckte Flachband mit den darauf angebrachten LEDs mit der flachen langen Seite des Flachbandes in diesen offenen Hohlraum 17 eingesetzt werden kann. Dabei können die LEDs auf dem langgestreckten Band sowohl auf nur einer als auch auf beiden gegenüberliegenden Flächen des Flachbandes angeordnet sein und somit entweder zu einer Seitenfläche des offenen Hohlraums 17 bzw. zu beiden Seitenflächen des offenen Hohlraums 17 Licht abstrahlen, wobei jedoch keine direkte Strahlung von den LEDs nach außen durch die Öffnung abgestrahlt wird. Das Flachband, auf dem die LEDs einseitig oder beidseitig montiert sind, weist vorzugsweise Abmessungen von 8 mm x 2,5 mm auf. D.h. das Flachband ist ca. 2,5 mm dick und ca. 8 mm breit. Die Längsausdehnung des Flachbandes hängt von der Länge der Einsatzleiste ab. Meist erstreckt sich die Einsatzleiste von einer Oberkante der Tür bis zur Unterkante der Tür, in die die Sicherheitsprofilleiste eingebaut ist. Eine abschnittsweise Erstreckung bzw. ein abschnittsweiser Einbau der Einsatzleiste in die Sicherheitsprofilleiste ist ebenso möglich.

Alternativ kann die Lichtquelle 13 innerhalb der ersten Einsatzleiste 12 auch so eingesetzt sein, dass die Lichtabgabe im Wesentlichen direkt in Richtung der Öffnung des Hohlraums 17 ausgerichtet ist, um eine maximale Lichtausbeute zu erzielen.

Das Material der ersten Einsatzleiste 12 und aber auch der zweiten Einsatzleiste 31 dient hier als optischer Diffusor, so dass durch das verwendete Material eine Lichtstreuung erfolgt und eine gleichmäßige Abstrahlung des Lichts an der Abstrahlfläche der ersten und zweiten Einsatzleiste 12, 31 ermöglicht wird. Dadurch wird verhindert, dass der Benutzer die sequentielle Anordnung der Lichtquellen bzw. LEDs auf dem langgestreckten Band innerhalb der Einsatzleiste 12, 31 erkennen kann. LEDs haben eine sehr intensive Lichtabstrahlung, die jedoch durch die erfindungsgemäße Einsatzleiste 12, 31 so gestreut wird, dass ein einheitliches nicht-blendendes Abstrahlen des Lichts ermöglicht wird.

Wenn dem Silikon, welches vorzugsweise als Material für die Einsatzleisten verwendet wird, Partikel, die die Transparenz verringern, beigemengt wird, lässt sich die Stärke der Diffusion beeinflussen. Es kann jedoch auch in besonderen Anwendungsfällen erwünscht sein, die Lichtquelle punktuell zu erkennen, so dass dann keine oder kaum Transparenz verringernde Partikel erforderlich sind.

Eine Alternative ist auch, ein Silikon zu verwenden, welches eine entsprechende Diffusion aufweist, ohne weitere Partikel oder Stoffe beim Herstellen der Einsatzleiste beizumengen.

Darüber hinaus ist es möglich, Flachbänder mit LEDs zu verwenden, die weniger blenden. D.h. die Diffusionsfunktion wird bereits durch die LED oder das Flachband bereitgestellt.

Weiter ist erfindungsgemäß vorgesehen, dass die erste Einsatzleiste 12 formschlüssig im offenen Hohlraum 17 befestigt ist. Dies ist einerseits möglich, indem die Einsatzleiste 12 Ausstülpungen 28 bzw. Ausnehmungen (nicht dargestellt) aufweist und im Basiskörper 11 entsprechende Einkerbungen 23 bzw. Ausstülpungen (nicht dargestellt) vorgesehen sind.

Darüber hinaus oder auch alternativ ist es möglich, dass die Einsatzleiste glatte Seitenflächen aufweist und ein Verklemmen der Einsatzleiste im offenen Hohlraum 17 durch Verspannelemente erfolgt, beispielsweise Keder (nicht dargestellt).

Um die Lichtausbeute zu erhöhen, ist es weiter möglich, die Innenseitenflächen des offenen Hohlraums 17 bzw. die entsprechenden Außenflächen der Einsatzleiste 12, die an den Innenseitenflächen des offenen Hohlraums 17 anliegen, wenigstens teilweise mit einem reflektierenden Material zu beschichten, um somit das Licht, welches zu diesen Seitenflächen des offenen Hohlraums 17 abgestrahlt wird, in Richtung Abstrahlfläche 25 der Einsatzleiste 12 zu lenken. Auch für die zweite Einsatzleiste 31 ist eine partielle Anordnung von reflektierenden Materialien vorzugsweise an der Außerseite der zweiten Einsatzleiste 31 möglich, um die Lichtabstrahlung an die gewünschten Abstrahlflächen zu lenken und ein Abstrahlen von Licht zu nicht sichtbaren Bereichen der Sicherheitsprofilleiste zu verhindern.

Um ein Einsetzen der ersten Einsatzleiste 12 weiter zu erleichtern, kann der Basiskörper 11 weitere Ausnehmungen 21 aufweisen, die ein Aufbiegen des Basiskörpers 11 und somit ein leichteres Einsetzen der Einsatzleiste 12 ermöglichen. Es ist auch möglich, die Einsatzleiste 12 im offenen Hohlraum 17 zu verkleben.

Die zweite Einsatzleiste 31 weist einen Schacht auf, in den eine zweite Lichtquelle 32 eingebettet ist. Diese zweite Lichtquelle 32 ist so in der zweiten Einsatzleiste 31 angeordnet, dass sie bei Draufsicht von der Seite der Fensterscheibe 16 aus nur teilweise von der Fensterscheibe 16 überlappt wird und darüber hinaus schräg zur Schieberichtung/Bewegungsrichtung der Tür 15 angeordnet ist. Die Position der Lichtquelle 32 kann jedoch auch parallel zur Innenseitenfläche der Luftkammer 35 ausgerichtet werden. Dadurch wird eine möglichst hohe Lichtausbeute erreicht bzw. wird die Abstrahlcharakteristik angepasst. Die Lichtausbeute kann, ähnlich wie bei der ersten Einsatzleiste 12, dadurch verstärkt werden, dass wenigstens teilweise Bereiche der angrenzenden Flächen des Basiskörpers 11 mit einem reflektierenden Material beschichtet sind, um ein Abstrahlen des Lichts zu verstärken. Alternativ können auch die Grenzflächen der zweiten Einsatzleiste 31 mit reflektierendem Material beschichtet sein, die an dem Basiskörper 11 anliegen oder Teile davon.

In Fig. 4 ist eine Doppeltür gemäß Figur 2 dargestellt, bei der beide Schiebetüren 15.1 und 15.2 eine erfindungsgemäße Sicherheitsprofilleiste 10 aufweisen. Die Sicherheitsprofilleiste 10 ist nahezu identisch zur Sicherheitsprofilleiste in Fig. 3a oder 3b. Der einzige Unterschied besteht darin, dass die Schiebetüren 15.1 und 15.2 gegeneinander laufen und nicht gegen einen Anschlag 40 wie bei einer einflügeligen Schiebetür gemäß Fig. 1. Da die Komponenten im Wesentlichen die gleichen wie in Fig. 3a und 3b sind, wird auf eine detaillierte Beschreibung der Fig. 4 verzichtet.

In Fig. 5a ist eine perspektivische Darstellung gemäß Fig. 4 mit Ansicht der Türprofile von der Seite der Fensterscheiben 16 dargestellt. Die zweiten Einsatzleisten 31 sind somit bei Draufsicht auf den Ausschnitt des Türprofils zu erkennen. Auf der hinteren Seite sind die ersten Einsatzleisten 12 zu erkennen, die Licht in diese Richtung abstrahlen. Die Abstrahlrichtung ist jeweils durch Pfeile dargestellt.

In Fig. 5b ist die Ansicht des Ausschnitts des Türprofils mit geschlossenen Türflügeln gemäß Fig. 5a dargestellt. Auch hier ist ersichtlich, dass die zweiten Einsatzleisten 31 nach vorn ausgerichtet sind und Licht in Richtung der Fensterscheiben 16 abstrahlen. Die ersten Einsatzleisten 12 in der Ansicht gemäß Fig. 5b sind nach hinten gerichtet und strahlen Licht nach hinten ab.

Je nach Einbauweise der Tür in das Transportmittel liegen die ersten Einsatzleisten 12 auf der Innenseite des Transportmittels bzw. bei einer anderen Einbauweise auf der Außenseite des Transportmittels. Die zweiten Einsatzleisten 31 liegen auf der Außenseite bzw. auf der Innenseite des Transportmittels. Die Fig. 5c zeigt eine Draufsicht auf einen Ausschnitt einer zweiflügligen geschlossenen Tür, bei dem die zweiten Einsatzleisten 31 der Sicherheitsprofilleisten 10 Licht zur Frontseite abstrahlen.

Fig. 6a zeigt Türprofile einer zweiflügligen Tür in der Ansicht von innen. In dieser Ansicht sind die ersten Einsatzleisten 12 so in die Sicherheitsprofilleiste 10 eingefügt, dass sie Licht zur Vorderseite der Türprofile gemäß Fig. 6a, d.h. in den Innenraum des Transportmittels, abstrahlen. Die zweiten Einsatzleisten 31 strahlen ihr Licht in Richtung Stirnseite der beiden Türprofile und in Richtung der Rückseite der Türprofile ab, d.h. zur Außenseite des Transportmittels. Die Fig. 6b zeigt den Ausschnitt der Türprofile gemäß Fig. 6a in geschlossenem Zustand.

In Fig. 7 ist ein Ausschnitt gemäß Fig. 6b als Draufsicht dargestellt. In Fig. 8 ist ein Ausschnitt der Türprofile gemäß Fig. 5a im geöffneten Zustand dargestellt, wobei in Fig. 9 eine Schnittdarstellung entlang der Linie C-C dargestellt ist.

In Fig. 9 ist ersichtlich, dass der Abstrahlbereich 29 (siehe Fig. 3a, 3b oder 4) einen Raum frei legt, der für Öffnungen in der Lichtgitteranordnung 19 benötigt wird, um von der Lichtgitteranordnung 19 Infrarotlicht auszustrahlen bzw. dieses zu empfangen. Im rechten Bereich ist die zweite Einsatzleiste 31 darstellt. Die erste Einsatzleiste 12 ist in Fig. 9 nicht dargestellt.

Fig. 10 zeigt eine vergrößerte Darstellung der ersten Einsatzleiste 12. Fig. 11 zeigt eine vergrößerte Darstellung der zweiten Einsatzleiste 31. Die erste Einsatzleiste 12 ist in dem Basiskörper 11 eingefügt, wobei der Basiskörper 11 aus einem opaken elastischen Material, vorzugsweise Gummi, hergestellt ist. Die erste Einsatzleiste 12 ist aus wenigstens teilweise transparentem Material, vorzugsweise Silikon, hergestellt. Die erste Einsatzleiste 12 umfasst eine Lichtquelle 13, die LEDs umfasst. Diese sind auf einem Flachband 37 angeordnet. In einer besonderen Ausgestaltung können die LEDs auf einem langgestreckten Flachband 37 in den Schacht in der Einsatzleiste 12 eingefügt werden. Das Licht der Lichtquelle 13 wird dabei vorzugsweise zur rechten und linken Seite gemäß der Darstellung in Fig. 10, d.h. in Richtung des Basiskörpers 11, ausgestrahlt und nicht in Richtung der Abstrahlfläche 25 der ersten Einsatzleiste. Dies hat den Vorteil, dass der offene Hohlraum 17 relativ schmal ausgestaltet werden kann und somit keine große Stabilitätseinbuße für die Sicherheitsprofilleiste nach sich zieht. Um trotz allem eine hohe Lichtausbeute zu erzielen, sind die Seitenflächen des offenen Hohlraums bzw. die Seitenflächen der ersten Einsatzleiste 12 mit einem reflektierenden Material 22 versehen oder beschichtet, um Anteile des Lichts, welches in diese Richtung abgestrahlt wurde, in Richtung Abstrahlfläche 25 zu leiten.

Um eine formschlüssige Verbindung zwischen der ersten Einsatzleiste 12 und dem Basiskörper 11 zu erzielen, weist die erste Einsatzleiste 12 Ausstülpungen 28 auf, die in Ausnehmungen 23 eingreift.

In einer analogen Ausgestaltung könnte die Einsatzleiste 12 analog zu den Ausstülpungen 23 im Basiskörper 11 auch Ausstülpungen enthalten, in die ein zusätzliches Verspannelement eingesetzt werden würde, um eine formschlüssige Verbindung zwischen der ersten Einsatzleiste 12 und dem Basiskörper 11 zu erzielen.

Um das Einsetzen weiter zu erleichtern, ist im hinteren Bereich des offenen Hohlraums 17 eine weitere Aussparung 21 vorgesehen, die ein Aufbiegen des Basiskörpers 11 zum Einsetzen der ersten Einsatzleiste 12 ermöglicht. Je nach Anwendung und Dimensionierung der Sicherheitsprofilleiste 10 können eine oder mehrere derartiger Ausnehmungen 21 vorgesehen sein, um ein einfacheres Einsetzen der ersten Einsatzleiste 12 zu gewährleisten.

In Fig. 11 ist die zweite Einsatzleiste 31 dargestellt. Es ist ersichtlich, dass der Basiskörper 11 eine schwalbenschwanzförmige Nut 18 aufweist, die den Aufnahmebereich für die Befestigung der zweiten Einsatzleiste 31 bildet. Dazu weist die zweite Einsatzleiste 31 eine schwalbenschwanzförmige Ausstülpung 33 auf, die in die schwalbenschwanzförmige Ausnehmung 18 eingesetzt wird. Die zweite Einsatzleiste 31 wird auf einer Seite von der Fensterscheibe 16 abgestützt und begrenzt. Der Fensterscheibe 16 gegenüber liegend weist der Basiskörper 11 einen Abstützkeil 34 auf, der ein Abknicken der zweiten Einsatzleiste 31 verhindert. D.h. die zweite Einsatzleiste 31 ist für die Aufnahme und Fixierung am Basiskörper zwischen Abstützkeil 34 und Fensterscheibe 16 angeordnet.

Die zweite Einsatzleiste 31 ist aus wenigstens teilweise transparentem Material, vorzugsweise Silikon, hergestellt und weist in ihrem vorderen Bereich bzw. im Stirnseiten- oder im Kontaktbereich eine Profillippe 36 und eine Luftkammer 35 auf, die bei Kontakt mit einem Anschlag oder einem Hindernis flexibel zusammengedrückt werden und somit in Zusammenhang mit der Kontaktleiste 14 im unteren Kontaktbereich ein Stoppen der Türbewegung ermöglichen.

Da die komplette zweite Einsatzleiste 31 aus wenigstens teilweise transparentem und elastischem Material hergestellt ist, ist es möglich, das von der Lichtquelle 32 ausgesendete Licht sowohl in Türschließrichtung auszusenden bzw. Licht in Richtung der Außen- oder Innenseite der Tür abzustrahlen. Auch hier ist sind die Lichtquellen 31 als LED 32 ausgestaltet, die auf einem Flachband 37 angebracht sind.

Die Lichtfarbe der ersten und zweiten Einsatzleiste 12, 31 kann vorzugsweise verschieden sein. Jede der ersten und zweiten Einsatzleiste 12, 31 kann vorzugsweise mehrere Farben ausgeben. Es ist auch möglich, dass je nach Türbewegung, d.h. beim Öffnen oder Schließen, die aktivierten Farben der LEDs 32 gewechselt werden und insbesondere beim Öffnen ein vorzugsweise grünes Licht auf der Innen- und Außenseite abgestrahlt wird und beim Schließen auf der Innen- und Außenseite, d.h. mit der ersten und zweiten Einsatzleiste, ein vorzugsweise rotes Licht ausgestrahlt wird.

Um die Aufmerksamkeit der Fahrgäste weiter zu erhöhen, ist es möglich, die LEDs, die in den jeweiligen Einsatzleisten 12, 31 vorhanden sind, nach oben oder unten oder ausgehend von der Mitte in beide Richtungen verlaufen zu lassen. Ebenso ist ein periodisches Aufleuchten der LEDs möglich, um somit die Aufmerksamkeit auf eine sich bewegende Tür zu lenken.

Die Figuren 12 und 13 stellen weitere Alternativen für die Ausgestaltung der Einsatzleisten dar. In Figur 12 ist beispielhaft die erste Einsatzleiste 12 dargestellt, wobei diese aus zwei Komponenten 12a und 12b hergestellt ist. Die hintere Komponente 12a ist dabei lichtundurchlässig bzw. opak. Die Komponente 12b an der Abstrahlfläche ist aus wenigstens teilweise transparentem Material hergestellt. Dies hat den Vorteil, dass beispielsweise die Lichtquelle 13 in die Komponente 12a eingesetzt werden kann und danach mit der vorderen transparenten Komponente versiegelt wird. Eine derartige Ausgestaltung ist auch für die zweite Einsatzleiste 31 möglich.

In Figur 13 ist beispielhaft die zweite Einsatzleiste 31 dargestellt, wobei die Lichtquelle 32 hier parallel zur hinteren Seite der Luftkammer ausgerichtet ist. Ebenso ist eine senkrechte Anordnung der Lichtquelle 32 zur Fensterscheibe 16 möglich.

Es ist auch möglich, nur eine der erfindungsgemäßen Einsatzleisten 12 oder 31 in eine Sicherheitsprofilleiste 10 einzusetzen. D.h. die Sicherheitsprofilleiste 10 kann nur die erste oder die zweite Einsatzleiste aufweisen, wobei dann im Bereich der anderen nicht existierenden Einsatzleiste der Basiskörper als opaker elastischer Körper ausgebildet ist.

Die Einsatzleisten können auch bezüglich der Einbauhöhe versetzt zueinander angeordnet sein. Z. B. könnte die erste Einsatzleiste 12 im mittleren Bereich der Tür angeordnet sein und die zweite Einsatzleiste 32 würde entweder nur im oberen oder unteren Bereich der Tür angeordnet werden oder sowohl unten als auch oben, aber nicht im mittleren Bereich.

Der Basiskörper 11 wird mittels eines Extruders hergestellt, so dass sowohl der offene Hohlraum 17, die Profillippe 51, die Kammer für die Kontaktleiste 14 und auch für die Lichtgitteranordnung 19 als auch der Aufnahmebereich für die zweite Einsatzleiste 32 in einem Extrudiervorgang hergestellt werden. Dadurch lassen sich verschiedenste Formen für den Basiskörper 11 realisieren. Durch das Extrudierverfahren lassen sich feste bis dickflüssige härtbare Massen, vorzugsweise Gummi, unter Druck kontinuierlich aus einer formgebenden Öffnung herauspressen und somit ist es möglich, auch sehr lange Profilstränge herzustellen.

Auch die Einsatzleisten werden mittels eines Extrudierverfahrens hergestellt. Hier wird als Material beispielsweise ein Silikon verwendet, welches wenigstens teilweise transparent ist. Somit lässt sich auch die Einsatzleiste einfach mit Ausstülpungen und/oder Ausnehmungen herstellen. Weiter kann der Schacht zur Aufnahme der Lichtquelle einfach hergestellt werden. Das Flachband 37 wird dann einfach in die Öffnungen des Schachts von unten oder oben eingeführt und versiegelt. Sollte die Länge der fertig montierten Sicherheitsprofilleiste zu lang sein, ist es auch möglich, die Einsatzleiste mit einem Zugangsschlitz zum Schacht zu versehen (nicht dargestellt). Dieser Zugangsschlitz würde dann in Längsrichtung der Einsatzleiste verlaufen und zwar an der Rückseite der Einsatzleiste, d.h. an der Seite, die in den Hohlraum 17 eingesetzt wird. Durch das Einsetzen der Einsatzleiste in den Hohlraum wird der Zugangsschlitz zusammengepresst und damit wird die Lichtquelle von der Einsatzleiste vollumschlossen und gegen Einflüsse von außen versiegelt.

Fig. 14 zeigt eine alternative Ausgestaltung einer erfindungsgemäßen Sicherheitsprofilleiste 10, die an einer Doppeltür analog zur Fig. 4 befestigt ist. Die beiden Flügel der Schiebetüren 15.1 und 15.2, vorzugsweise eine Innen- oder Außenschwenktür, laufen bei einer Schließbewegung gegeneinander. Ähnlich wie die erfindungsgemäße Sicherheitsprofilleiste 10 in Fig. 3a und 3b bzw. Fig. 4 weisen die in Fig. 14 dargestellten Sicherheitsprofilleisten 10 jeweils einen Basiskörper 11 auf, der vorzugsweise aus Gummi hergestellt ist. Die Sicherheitsprofilleisten 10 weisen mehrere Luftkammern 43, 44 und 45 auf, die beim Gegeneinanderlaufen der Sicherheitsprofilleisten 10 komprimiert werden. Es ist jeweils eine Kontaktleiste 14 vorgesehen, die bei Kompression durch einen Gegenstand ein elektrisches Signal abgibt, um beispielsweise ein Reversieren der Türen auszulösen.

Weiter weist jede der Sicherheitsprofilleisten 10 gemäß Fig. 14 jeweils zwei Einsatzleisten 12 auf, die gleichartig ausgestaltet sind, wodurch der Herstellungsaufwand für die Sicherheitsprofilleisten im Vergleich zu der Sicherheitsprofilleiste gemäß Fig. 3 bzw. Fig. 4 reduziert wird. Es ist jedoch ebenso möglich, die beiden Sicherheitsprofilleisten 10 anwendungsbedingt verschieden auszubilden.

Weiter sind Dichtlippen 46 im Kontaktbereich vorhanden, die im geschlossenen Zustand der Doppeltür übereinanderliegen. Im Basiskörper 11 ist jeweils eine kreisrunde Kammer 42 vorgesehen, die als Kabeldurchführung dient und für die Durchführung der Stromversorgung für die Leuchtmittel 13 in den Einsatzleisten 12 vorgesehen ist. Der Profilfuß 27 ist jeweils in einem Hohlprofil, vorzugweise aus Aluminium, der Türflügel 15.1 und 15.2 aufgenommen. Die Außenseite der Tür, d.h. die im montierten Zustand nach außen gerichtete Seite des Transportmittels bzw. des Gebäudes, weist eine Glasscheibe 16 auf, die im Randbereich von einer Abdecklippe 41 der Sicherheitsprofilleiste 10 bedeckt ist. Die Glasscheibe 16 kann in diesem Ausführungsbeispiel und auch bei allen Ausführungsbeispielen durch andere Abdeckungen, bspw. aus Kunststoff oder Metall ersetzt werden.

Es ist in Fig. 14 nicht dargestellt, jedoch ohne Weiteres einfach vorstellbar, dass der linke Bereich als feststehender Bereich eines Türportals ausgebildet ist, gegen die im rechten Bereich dargestellte Tür 15 mit der erfindungsgemäßen Sicherheitsprofilleiste anschlägt.

Mit Verweis auf die Ausgestaltung in Fig. 1b bzw. 1c ist es möglich, die Einsatzleisten 12 mit den Leuchtmitteln 13 in Bezug auf die Längenausdehnung der Sicherheitsprofilleiste nur partiell bezüglich der kompletten Höhe der Tür auszugestalten. Da die Sicherheitsprofilleiste 10 mit einer entsprechenden Befestigung am Türportal nicht bewegt wird, können die Einsatzleisten 12 großflächiger ausgestaltet werden. Darüber hinaus ist wie bereits oben beschrieben, die Zuführung der Stromversorgung zu den Leuchtmitteln 13 für die Sicherheitsprofilleiste am Türportal einfacher.

Es ist in den Figuren nicht dargestellt, jedoch ebenso möglich, dass die erfindungsgemäße Sicherheitsprofilleiste 10 an einer Drehschwenktür, einer Drehtür, einer Falttür, einer Schwenkschiebetür, einer Innenschwenktür oder einer Außenschwingtür etc. angeordnet ist, die entweder gegen einen feststehenden Türanschlag bzw. gegen einen anderen Flügel einer entsprechenden Tür läuft.

## Patentansprüche

1. Sicherheitsprofilleiste (10) für eine Tür (15) von Transportmitteln, wobei die Sicherheitsprofilleiste (10) einen opaken elastischen Basiskörper (11) enthält, wobei der Basiskörper (11) einen als offenen Hohlraum (17) ausgestalteten Aufnahmebereich aufweist, der zwischen einem stirnseitigen Kontaktbereich der Sicherheitsprofilleiste (10) und einem Befestigungsbereich (27) der Sicherheitsprofilleiste (10) angeordnet ist, wobei der offene Hohlraum (17) zu einem Innenraum oder zu einer Außenseite des Transportmittels gerichtet ist, wobei eine Einsatzleiste (12, 31) in den offenen Hohlraum (17) eingesetzt ist, wobei die extrudierte Einsatzleiste (12, 31) wenigstens eine Lichtquelle (13, 32) enthält,
**dadurch gekennzeichnet, dass** die extrudierte Einsatzleiste (12, 31) aus einem elastischen, wenigstens teilweise transparent Material ausgebildet ist, dass
der Kontaktbereich aus mehreren dünnen Stegen und durch diese gebildete Luftkammern (26) gebildet ist und in diesem Kontaktbereich eine abstehenden Profillippe (51) angeordnet ist, die bei einer Bewegung der Tür an einen Anschlag (40) bzw. an eine gegenüberliegende Tür bzw. deren Sicherheitsprofilleiste anschlägt und dass
der Befestigungsbereich (27) im eingebauten Zustand in ein Alu- oder Stahlprofil der Tür (15) eingesetzt ist.

2. Sicherheitsprofilleiste nach Anspruch 1, wobei der Hohlraum (17) als ein erster Aufnahmebereich (17) wenigstens zur Außenseite der Sicherheitsprofilleiste (10) offen ausgebildet ist, wobei in den offenen Hohlraum (17) eine oder mehrere aus wenigstens teilweise transparentem Material gefertigte erste Einsatzleiste (12) eingefügt ist, die die Lichtquelle (13) enthält.

3. Sicherheitsprofilleiste nach Anspruch 1 oder 2, wobei ein zweiter Aufnahmebereich (18) als Formschlussbereich (18) ausgebildet ist, wobei am Formschlussbereich (18) eine zweite Einsatzleiste (31) einsetzbar oder ansetzbar ist, die einen dem Formschlussbereich (18) entsprechenden Befestigungsabschnitt (33) aufweist und/oder wobei die zweite Einsatzleiste (31) eine Lichtquelle (32) enthält und auf einer dem offenen Hohlraum (17) mit der ersten Einsatzleiste (12) gegenüberliegenden Seite der Sicherheitsprofilleiste (10) angeordnet ist.

4. Sicherheitsprofilleiste nach einem der vorhergehenden Ansprüche 2 oder 3, wobei d der Formschlussbereich (18) an einer Stirnseite des Basiskörpers (11) ausgebildet ist, die zu einer weiteren Tür (15.2) oder zu einem Anschlag (40) gerichtet ist.

5. Sicherheitsprofilleiste nach einem der vorhergehenden Ansprüche 2-4, wobei der offene Hohlraum (17) wenigstens eine Ausnehmung (23) aufweist, die einen Formschluss mit wenigstens einer korrespondierenden Ausstülpung (28) der Einsatzleiste (12) bildet.

6. Sicherheitsprofilleiste nach einem der vorhergehenden Ansprüche, wobei an einer an die Einsatzleiste (12, 31) angrenzende Fläche ein reflektierender Bereich (22) ausgebildet ist, der ein von der Lichtquelle (13, 32) abgestrahltes Licht von dem Basiskörper (11) hinweg oder aus diesem heraus leitet und/oder das wenigstens teilweise transparente Material der Einsatzleiste (12, 31) einen optischen Diffusor bildet.

7. Sicherheitsprofilleiste nach einem der vorhergehenden Ansprüche, wobei die Sicherheitsprofilleiste (10) eine elektrische Kontaktleiste (14) und/oder eine Lichtgitteranordnung (19) aufweist.

8. Sicherheitsprofilleiste nach einem der vorhergehenden Ansprüche, wobei die Lichtquelle (13, 32) LEDs enthält, die Licht in einer oder mehreren Farben im sichtbaren Wellenbereich ausgeben und/oder die LEDs auf einem langgestreckten Flachband (37) angeordnet sind, welches mit seiner Längsausrichtung in den offenen Hohlraum (17) eingesetzt ist, wobei die mehreren LEDs auf einer oder beiden Seitenflächen des Flachbandes angeordnet sind und/oder wobei die Lichtquelle (13, 32) beim Schließen der Tür (15) Licht einer ersten Farbe ausgibt und beim Öffnen der Tür (15) Licht einer anderen Farbe ausgibt.

9. Sicherheitsprofilleiste nach einem der Ansprüche 3-8, wobei der Formschluss mittels einer schwalbenschwanzförmigen Ausnehmung (18) im Basiskörper (11) und einer dazu korrespondierenden Ausstülpung (33) an der zweiten Einsatzleiste (31) oder einer schwalbenschwanzförmigen Ausstülpung am Basiskörper (11) und einer entsprechenden Ausnehmung an der zweiten Einsatzleiste (31) gebildet wird.

10. Sicherheitsprofilleiste nach einem der vorhergehenden Ansprüche 2-9, wobei zwischen die erste Einsatzleiste (12) und den offenen Hohlraum (17) Verspannelemente eingesetzt werden, um die erste Einsatzleiste (12) im Hohlraum (17) zu fixieren.

11. Sicherheitsprofilleiste nach einem der vorhergehenden Ansprüche, wobei die erste Einsatzleiste (12) zwischen einer elektrischen Kontaktleiste (14) und einem Befestigungsbereich (27) der Sicherheitsprofilleiste (10) an der Tür (15) und/oder außerhalb eines flexiblen Kontaktbereichs der Sicherheitsprofilleiste (10) angeordnet ist.

12. Sicherheitsprofilleiste nach einem der vorhergehenden Ansprüche 3-11, wobei der Basiskörper einen Abstützkeil (34) aufweist, der die zweite Einsatzleiste (31) von einer Innenseite der Sicherheitsprofilleiste (10) abstützt, um ein Abknicken der zweiten Einsatzleiste (31) zu verhindern.

13. Sicherheitsprofilleiste nach einem der vorhergehenden Ansprüche 3-12, wobei die zweite Einsatzleiste (31) Licht in Richtung Stirnseite der Sicherheitsprofilleiste (10) und zu einer Außenseite der Tür (15) abstrahlt.

14. Sicherheitsprofilleiste nach einem der vorhergehenden Ansprüche 3-13, wobei die erste und/oder zweite Einsatzleiste (12, 31) einen opaken und einen wenigstens teilweise transparenten Anteil aufweist und/oder die erste und zweite Einsatzleiste (12) die gleiche Form oder verschiedene Formen oder Konturen aufweisen.

15. Tür mit einer Sicherheitsprofilleiste (10) nach einem der vorhergehenden Ansprüche, wobei die Sicherheitsprofilleiste (10) in einem beweglichen Türflügel (15) und/oder einem Türportal (50) angeordnet ist.

## Claims

1. A profiled safety strip (10) for a door (15) of means of transport, wherein the profiled safety strip (10) contains an opaque elastic base body (11), wherein the base body (11) has a receiving section which is formed as an open cavity (17) which is arranged between a front face contact region of the profiled safety strip (10) and a fitting region (27) of the profiled safety strip, wherein the open cavity (17) is directed towards an inner space or towards an exterior side of the means of transport, wherein an insert strip (12, 31) is arranged in the open cavity (17), wherein the extruded insert strip (12, 31) contains at least one light source (13, 32),
**characterized in that** the extruded insert strip (12, 31) is made of an elastic material that is at least partially transparent, **in that**
the contact region is formed by a plurality of thin bars and air chambers (26) formed thereby, and that in this contact region, a profiled lip (51) is arranged which, when the door moves, strikes against a stop (40) or against an oppositely situated door or the profiled safety strip thereof, and that
the fastening region (27), in the assembled state, is fitted into an aluminium profile or steel profile of the door.

2. The profiled safety strip according to claim 1, wherein the cavity (17), as a first receiving region (17), is embodied as being open at least to the exterior side of the profiled safety strip (10), wherein one or more first insert strips (12) made of an at least partially transparent material are inserted into the open cavity (17) and contain the light source (13).

3. The profiled safety strip according to claim 1 or 2, wherein a second receiving region (18) is embodied as a form-fitting region (18), wherein a second insert strip (31) is insertable or arrangeable in the form-fitting region (18), which has a fastening portion (33) corresponding to the form-fitting region (18), and/or wherein the second insert strip (31) contains a light source (32) and is arranged on a side of the profiled safety strip (10) that is situated opposite the open cavity (17) with the first insert strip (12).

4. The profiled safety strip according to any one of the preceding claims 2 or 3, wherein the form-fitting region (18) is embodied on a front face of the base body (11) that faces toward another door (15.2) or a stop (40).

5. The profiled safety strip according to any one of the preceding claims 2-4, wherein the open cavity (17) has at least one recess (23) that forms a form-fitting connection with at least one corresponding protuberance (28) of the insert strip (12).

6. The profiled safety strip according to any one of the preceding claims, wherein a reflective region (22) is formed on a surface adjoining the insert strip (12, 31), which deflects a light emitted by the light source (13, 32) away from or out of the base body (11), and/or the at least partially transparent material of the insert strip (12, 31) forms an optical diffuser.

7. The profiled safety strip according to any one of the preceding claims, wherein the profiled safety strip (10) has an electrical contact strip (14) and/or a light grid arrangement (19).

8. The profiled safety strip according to any one of the preceding claims, wherein the light source (13, 32) contains LEDs that emit light in one or more colors in the visible wavelength range, and/or the LEDs are arranged on an elongate flat strip (37) that is inserted longitudinally into the open cavity (17), the plurality of LEDs being arranged on one or both side surfaces of the flat strip and/or wherein the light source (13, 32) emits light of a first color when the door (15) is being closed and light of a different color when the door (15) is being opened.

9. The profiled safety strip according to any one of claims 3-8, wherein the form-fitting connection is formed by means of a dovetail-shaped recess (18) in the base body (11) and a corresponding protuberance (33) on the second insert strip (31) or a dovetail-shaped protuberance on the base body (11) and a corresponding recess on the second insert strip (31).

10. The profiled safety strip according to any one of the preceding claims 2-9, wherein clamping elements are being inserted between the first insert strip (12) and the open cavity (17) in order to fix the first insert strip (12) in the cavity (17).

11. The profiled safety strip according to any one of the preceding claims, wherein the first insert strip (12) is arranged between an electrical contact strip (14) and a fastening region (27) of the profiled safety strip (10) on the door (15) and/or outside a flexible contact region of the profiled safety strip (10).

12. The profiled safety strip according to any one of the preceding claims 3-11, wherein the base body has a support wedge (34) that supports the second insert strip (31) from an inner side of the profiled safety strip (10) in order to prevent kinking of the second insert strip (31).

13. The profiled safety strip according to any one of the preceding claims 3-12, wherein the second insert strip (31) emits light in a direction of a front face of the profiled safety strip (10) and to an outer side of the door (15).

14. The profiled safety strip according to any one of the preceding claims 3-13, wherein the first and/or second insert strip (12, 31) has an opaque and an at least partially transparent portion, and/or wherein the first and second insert strips (12) have the same shape or different shapes or contours.

15. A door with a profiled safety strip (10) according to any one of the preceding claims, wherein the profiled safety strip (10) is arranged in a movable door leaf (15) and/or a door portal (50).

## Revendications

1. Barre de sécurité profilée (10) pour une porte (15) de moyens de transport, dans laquelle la barre de sécurité profilée (10) contient un corps de base élastique opaque (11), dans laquelle le corps de base (11) comporte une zone de réception conçue sous la forme d'une cavité ouverte (17), qui est agencée entre une zone de contact côté extrémité de la barre de sécurité profilée (10) et une zone de fixation (27) de la barre de sécurité profilée (10), dans laquelle la cavité ouverte (17) est dirigée vers un espace intérieur ou vers un côté extérieur des moyens de transport, dans laquelle une barre d'insert (12, 31) est insérée dans la cavité ouverte (17), dans laquelle la barre d'insert extrudée (12, 31) contient au moins une source de lumière (13, 32),
**caractérisée en ce que** la barre d'insert extrudée (12, 31) est réalisée à partir d'un matériau élastique au moins partiellement transparent,
**en ce que** la zone de contact est formée de plusieurs nervures minces et de chambres d'air (26) formées par celles-ci et dans cette zone de contact est agencée une lèvre profilée saillante (51) qui vient en butée contre une butée (40) ou contre une porte opposée ou sa barre de sécurité profilée lors d'un mouvement de la porte, et
**en ce que**, à l'état monté, la zone de fixation (27) est insérée dans un profilé en aluminium ou en acier de la porte (15).

2. Barre de sécurité profilée selon la revendication 1, dans laquelle la cavité (17) est réalisée ouverte vers au moins le côté extérieur de la barre de sécurité profilée (10) sous la forme d'une première zone de réception (17), dans laquelle une ou plusieurs premières barres d'insert (12) fabriquées à partir d'un matériau au moins partiellement transparent, qui contiennent la source de lumière (13), sont insérées dans la cavité ouverte (17).

3. Barre de sécurité profilée selon la revendication 1 ou 2, dans laquelle une seconde zone de réception (18) est réalisée sous forme de zone d'assemblage par complémentarité de formes (18), dans laquelle une seconde barre d'insert (31) peut être utilisée ou placée sur la zone d'assemblage par complémentarité de formes (18), laquelle seconde barre d'insert comportant une partie de fixation (33) correspondant à la zone d'assemblage par complémentarité de formes (18) et/ou dans laquelle la seconde barre d'insert (12) contient une source de lumière (32) et est agencée sur un côté de la barre de sécurité profilée (10) opposé à la cavité ouverte (17) avec la première barre d'insert (12).

4. Barre de sécurité profilée selon l'une des revendications 2 ou 3 précédentes, dans laquelle la zone d'assemblage par complémentarité de formes (18) est réalisée sur un côté d'extrémité du corps de base (11) qui est dirigé vers une autre porte (15.2) ou vers une butée (40).

5. Barre de sécurité profilée selon l'une des revendications 2 à 4 précédentes, dans laquelle la cavité ouverte (17) comporte au moins un évidement (23) qui forme un assemblage par complémentarité de formes avec au moins une saillie (28) correspondante de la barre d'insert (12).

6. Barre de sécurité profilée selon l'une des revendications précédentes, dans laquelle une zone réfléchissante (22) est réalisée sur une surface adjacente à la barre d'insert (12, 31), laquelle zone dévie une lumière émise par la source de lumière (13, 32) en l'éloignant ou à l'extérieur du corps de base (11) et/ou le matériau au moins partiellement transparent de la barre d'insert (12, 31) forme un diffuseur optique.

7. Barre de sécurité profilée selon l'une des revendications précédentes, dans laquelle la barre de sécurité profilée (10) comporte une bande de contact électrique (14) et/ou un ensemble de barrière lumineuse (19).

8. Barre de sécurité profilée selon l'une des revendications précédentes, dans laquelle la source de lumière (13, 32) contient des LED qui émettent de la lumière dans une ou plusieurs couleurs dans la plage de longueur d'onde visible et/ou les LED sont agencées sur une barre plate s'étendant longitudinalement (37) qui est insérée dans la cavité ouverte (17) suivant son orientation longitudinale, dans laquelle les LED de la pluralité de LED sont agencées sur une ou deux surfaces latérales de la barre plate et/ou dans laquelle la source de lumière (13, 32) émet une première lumière lors de la fermeture de la porte (15) et émet de la lumière d'une autre couleur lors de l'ouverture de la porte (15).

9. Barre de sécurité profilée selon l'une des revendications 3 à 8, dans laquelle l'assemblage par complémentarité de formes est formé au moyen d'un évidement en queue d'aronde (18) dans le corps de base (11) et d'une saillie (33) correspondante sur la seconde barre d'insert (31), ou d'une saillie en queue d'aronde sur le corps de base (11) et d'un évidement correspondant sur la seconde barre d'insert (31).

10. Barre de sécurité profilée selon l'une des revendications 2 à 9 précédentes, dans laquelle des éléments de serrage sont utilisés entre la première barre d'insert (12) et la cavité ouverte (17) afin de fixer la première barre d'insert (12) dans la cavité (17).

11. Barre de sécurité profilée selon l'une des revendications précédentes, dans laquelle la première barre d'insert (12) est agencée entre une bande de contact électrique (14) et une zone de fixation (27) de la barre de sécurité profilée (10) sur la porte (15) et/ou à l'extérieur d'une zone de contact souple de la barre de sécurité profilée (10).

12. Barre de sécurité profilée selon l'une des revendications 3 à 11 précédentes, dans laquelle le corps de base comporte un coin de support (34) qui supporte la seconde barre d'insert (31) à partir d'un côté intérieur de la barre de sécurité profilée (10) afin d'empêcher un fléchissement de la seconde barre d'insert (31).

13. Barre de sécurité profilée selon l'une des revendications 3 à 12 précédentes, dans laquelle la seconde barre d'insert (31) émet de la lumière en direction de la face avant de la barre de sécurité profilée (10) et vers le côté extérieur de la porte (15).

14. Barre de sécurité profilée selon l'une des revendications 3 à 13 précédentes, dans laquelle la première et/ou seconde barre d'insert (12, 31) comporte une partie opaque et une partie au moins partiellement transparente et/ou les première et seconde barres d'insert (12) présentent la même forme ou des formes ou contours différents.

15. Porte avec une barre de sécurité profilée (10) selon l'une des revendications précédentes, dans laquelle la barre de sécurité profilée (10) est agencée dans un battant de porte mobile (15) et/ou un encadrement de porte (50).
